# EUROPÄISCHE PATENTSCHRIFT

(11) **EP 3 578 049 B1**
(45) Veröffentlichungstag und Bekanntmachung des Hinweises auf die Patenterteilung: **22.06.2022**
(21) Anmeldenummer: 19176669.0
(22) Anmeldetag: 27.05.2019
(51) Int. Cl.: A21B 1/48, B65G 17/06, B65G 17/32

(54) **ENDLOS-FÖRDERBAND FÜR EINEN DURCHLAUF-BACKOFEN**
ENDLESS CONVEYOR BELT FOR CONTINUOUS OVEN
BANDE TRANSPORTEUSE CONTINUE POUR UN FOUR À CUIRE À PASSAGE CONTINU

(30) Priorität: 06.06.2018 DE 102018208960
(43) Veröffentlichungstag der Anmeldung: 11.12.2019
(73) Patentinhaber: Werner & Pfleiderer Industrielle Backtechnik GmbH, 71732 Tamm (DE)
(72) Erfinder: Tschida, Josef, 71691 Freiberg (DE)
(74) Vertreter: Rau, Schneck & Hübner Patentanwälte Rechtsanwälte PartGmbB

(56) Entgegenhaltungen:
- WO-A1-2013/142136
- DE-A1- 2 403 488
- US-B1- 7 325 486

## Beschreibung

Die Erfindung betrifft ein Endlos-Förderband für einen Durchlauf-Backofen. Ferner betrifft die Erfindung ein Backofenmodul mit einem derartigen Endlos-Förderband sowie einen Backofen mit einem derartigen Endlos-Förderband.

Ein Endlos-Förderband für einen Durchlauf-Backofen ist vom Markt her bekannt. Dort liegen die Bandglieder als quer zur Förderrichtung verlaufende Rohre vor, auf die ein Drahtgeflecht zur Auflage von Backgut oder Backgutträgern geschweißt ist. Die DE 691 12 035 T2 beschreibt einen Ofenaufbau zum Großproduktions-Garen, bei dem Nahrungsmittel kontinuierlich in einer spiralförmigen, vertikal ansteigenden Bahn durch eine Garkammer transportiert werden. Ähnliche Ofenaufbauten zeigen die US 4,118,181 A und die US 2010/0 112 169 A1. Die US 7,325,486 B1 offenbart eine Vorrichtung zur Lebensmittelzubereitung. Die DE 2 403 488 A1 offenbart ein Verfahren und einen Durchlaufofen zur Behandlung von Nahrungsmitteln. Die WO 2013/142 136 A1 beschreibt einen Spiralförderer. Es ist eine Aufgabe der vorliegenden Erfindung, ein Endlos-Förderband der eingangs genannten Art derart weiterzubilden, dass eine Beheizung eines Backraums eines Durchlauf-Backofens, der mit einem derartigen Endlos-Förderband ausgerüstet ist, effizienter und flexibler ausgeführt werden kann.

Diese Aufgabe ist erfindungsgemäß gelöst durch ein Endlos-Förderband mit den im Anspruch 1 angegebenen Merkmalen.

Erfindungsgemäß wurde erkannt, dass eine Größe einer Gesamt-Öffnungsfläche von Gas-Durchtrittsöffnungen in den Bandgliedern, gesehen in Projektion senkrecht zu einer Förderebene, die Effizienz einer Backraumbeheizung dadurch erhöhen hilft, dass ein Strömungswiderstand für ein Fluid, z.B. Luft, welches den Backraum nach Durchgang durch das Fördertrum des Endlos-Förderbandes durchtritt, reduziert ist. Im Verhältnis zur Gesamt-Projektionsfläche des Bandgliedes auf die Förderebene kann die Gesamt-Öffnungsfläche der Gas-Durchtrittsöffnungen, gesehen in gleicher Projektionsrichtung, größer sein als 30%, kann größer sein als 40%, kann größer sein als 50% und kann auch noch größer sein. Ein Bandverlauf des Endlos-Förderbandes kann so sein, dass ein Fördertrum, welches einen Backraum des Durchlauf-Backofens durchläuft, geradlinig in einer Ebene verläuft. Die einstückige Gestaltung der Bandglieder erhöht die Stabilität des Endlos-Förderbandes. Eine unerwünschte Verlagerung zwischen Auflageelementen und Rahmenelementen, die bei mehrteiligen Ausführungen von Bandgliedern nach dem Stand der Technik vorhanden sind, ist vermieden. Die einstückigen Bandglieder können selbsttragende Querträger des Förderbandes darstellen. Jedes der Bandglieder hat zwischen den seitlichen Führungen mehrere voneinander senkrecht zur Förderebene beabstandete Gliederebenen, in denen jeweils Gas-Durchtrittsöffnungen vorliegen. Derartige Gliederebenen erhöhen eine Stabilität des jeweiligen Bandgliedes. Die Druchtrittsöffnungen einer der Gliederebenen haben eine Längserstreckung längs der Erstreckung des Bandgliedes. Die Durchtrittsöffnungen einer der Gliederebenen haben eine Längserstreckung quer zur Erstreckung des Bandgliedes. Derartige Längserstreckungen der Durchtrittsöffnungen längs der Bandgliederstreckung und/oder quer zur Bandgliederstreckung sorgen für eine definierte Stabilität des Bandgliedes in Bezug auf in bestimmten Richtungen auftretenden Belastungskräften. Die längsverlaufenden Durchtrittsöffnungen ermöglichen eine Längsverstrebung des Bandgliedes. Entsprechend ermöglichen die querverlaufenden Durchtrittsöffnungen eine Querverstrebung des Bandgliedes.

Eine selbsttragende Ausführung der Bandglieder vermeidet unerwünschten Abrieb, da ein unerwünschter Kontakt zwischen den Bandgliedern und einer sich nicht mitbewegenden Grundplatte des Backofens vermieden werden kann.

Bei dem Backofen kann es sich um einen Durchlauf-Backofen, insbesondere um einen Tunnelofen handeln. Der Backofen kann aus mehreren Backofenmodulen gefertigt sein, die insbesondere gleichartig aufgebaut sein können.

Ein Ausführungsbeispiel der Erfindung wird nachfolgend anhand der Zeichnung näher erläutert. In dieser zeigen:
- Fig. 1: eine Seitenansicht eines modular aufgebauten Backenofens;
- Fig. 2: einen Schnitt gemäß Linie II-II in Fig. 1;
- Fig. 3: eine perspektivische Ansicht auf einen Schlangen-Rohrwärmetauscher für ein Backofenmodul des Backenofens nach Fig. 1;
- Fig. 4: eine Ausschnittsvergrößerung einer perspektivischen Ansicht des Rohrwärmetauschers nach Fig. 3 im Bereich von 180°-Umlenkabschnitten zweier Schlangen-Leitungswege;
- Fig. 5: in einer zu Fig. 4 ähnlichen Darstellung wiederum eine perspektivische Ansicht der 180°-Umlenkabschnitte, in etwa aus der entgegengesetzten Blickrichtung wie in Fig. 4;
- Fig. 6: in einer zu den Fig. und 5 ähnlichen Darstellung eine Aufsicht auf einen Abschnitt des Rohrwärmetauschers, die einen Abstand zwischen jeweils zwei benachbarten Rohrabschnitten verdeutlicht;
- Fig. 7: schematisch Strömungsverhältnisse beim Durchtritt eines Gases, an welches der Rohrwärmetauscher Wärme abgibt, durch Durchgänge zwischen zwei im Querschnitt dargestellten, benachbarten Rohrabschnitten des Rohrwärmetauschers;
- Fig. 8: eine perspektivische Ansicht eines Bandgliedes eines Endlos-Förderbandes des Backofens; und
- Fig. 9: eine Aufsicht auf das Bandglied nach Fig. 8.

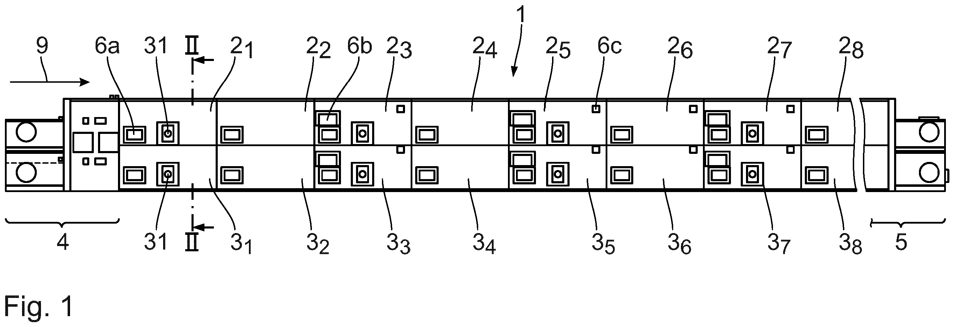

Fig. 1 zeigt eine Gesamt-Seitenansicht eines als Tunnelofen ausgeführten Durchlauf-Backofens 1, mit dem z.B. Dauerbackgebäck in Form von Weichkeksen, Hartkeksen oder Laugengebäck produziert werden können. Auch anderes Backgut, z.B. Toastbrot, kann im Backofen verarbeitet werden. Mit dem Backofen 1 ist auch ein Rösten und als Spezialanwendung auch ein Trocknen oder Sterilisieren möglich. Der Backofen 1 ist in der dargestellten Ausführung unterbrochen dargestellt und hat eine Mehrzahl von Ofenmodulen 2ᵢ, 3ᵢ mit Backräumen, die zusammen zwei übereinanderliegende Durchlauf-Backräume zwischen jeweils einem in Backgut-Förderrichtung führenden Anfangs-Ofenmodul 2₁, 3₁ und jeweils einem in Backgut-Förderrichtung letzten Abschluss-Ofenmodul 2_{N}, 3_{N} (i = 1, ..., N, N: Anzahl der Ofenmodule) bilden. In der Fig. 1 sind insgesamt acht Ofenmodule 2₁ bis 2₈, die zu einem oberen Durchlauf-Backraum gehören, und darunterliegend acht Ofenmodule 3₁ bis 3₈ dargestellt, die zu einem unteren Durchlauf-Backraum des Durchlauf-Backofens 1 gehören. Die Ofenmodule sind beim Durchlauf-Backofen 1 also zweistöckig angeordnet.

Die Ofenmodule 2₁ bis 2₈ sowie 3₁ bis 3₈ haben jeweils den gleichen Grundaufbau, insbesondere was eine Tragrahmengestaltung sowie Aufnahmen für An- und Einbauteile angeht. Insoweit haben die Ofenmodule 2₁ bis 2₈ und 3₁ bis 3₈ die gleichen Abmessungen, haben also, was Höhe, Breite und Tiefe angeht, jeweils grundsätzlich die gleichen Bauraumerfordernisse.

Die Ofenmodule 2₁ bis 2₈ und 3₁ bis 3₈ liegen zunächst als separate Module vor und werden beim Zusammenbau des Backofens 1 miteinander verbunden. In jedem der Backofenmodule 2₁ bis 2₈ und 3₁ bis 3₈ wird über nachfolgend noch beschriebene Wärmetauscher geheizte Umluft jeweils in einem Kreislauf geführt. Die oberen Ofenmodule 2₁ bis 2₈ werden von den unteren Ofenmodulen 3₁ bis 3₈ getragen. Die unteren Ofenmodule 3₁ bis 3₈ werden von einem Maschinenboden getragen.

Vor einem in der Backgut-Förderrichtung jeweils führenden Anfangs-Backofenmodul 2₁ beziehungsweise 3₁ ist in der Förderrichtung ein Beschickungsmodul 4 für das Backgut angeordnet, welches wiederum zweistöckig ausgeführt ist und mit den beiden Durchlauf-Backräumen kommuniziert. Hinter einem in der Backgut-Förderrichtung letzten Abschluss-Ofenmodul 2ᵢ sowie 3ᵢ ist ein Ausgabemodul 5 des Durchlauf-Backofens 1 zum Übernehmen des gebackenen Backguts aus den Durchlauf-Backräumen und zum Ausgeben von diesem angeordnet, welches ebenfalls zweistöckig ausgeführt ist und wiederum mit den beiden Durchlauf-Backräumen kommuniziert. Das Beschickungsmodul 4 einerseits und das Ausgabemodul 5 andererseits schließen den Umluftkreislauf am Anfang und am Ende der Durchlauf-Backräume jeweils ab.

Zwischen den Ofenmodulen 2₈, 3₈ und dem Ausgabemodul 5 ist der Durchlauf-Backofen 1 in der Fig. 1 unterbrochen dargestellt, um anzudeuten, dass die Anzahl der Ofenmodule 2ᵢ, 3ᵢ größer sein kann, als in der Fig. 1 dargestellt. Die Anzahl N der Ofenmodule 2ᵢ, 3ᵢ kann in der Praxis beispielsweise zwischen 5 und 20 variieren.

Zu backendes Backgut tritt über das Beschickungsmodul 4 in den jeweiligen Durchlauf-Backraum 7, 8, also in das jeweils führende Anfangs-Ofenmodul 2₁, 3₁ ein, durchläuft den jeweiligen Durchlauf-Backraum 7, 8 längs der Backgut-Förderrichtung 9 und tritt über das Ausgabemodul 5 nach Durchlaufen der jeweils letzten Abschluss-Ofenmodule 2ᵢ, 3ᵢ aus den Durchlauf-Backräumen 7, 8 fertig gebacken wieder aus.

In der Seitenansicht des Durchlauf-Backofens nach Fig. 1 sind bei einigen oder allen der Ofenmodule 2ᵢ, 3ᵢ zudem vorgesehen jeweils eine Reinigungsöffnung 6a, jeweils eine Inspektionsöffnung 6b und jeweils eine Schwadenöffnung 6c. Über die jeweilige Schadenöffnung 6c ist ein Be-/Entschwaden des jeweiligen Backraums des Ofenmoduls 2ᵢ, 3ᵢ möglich.

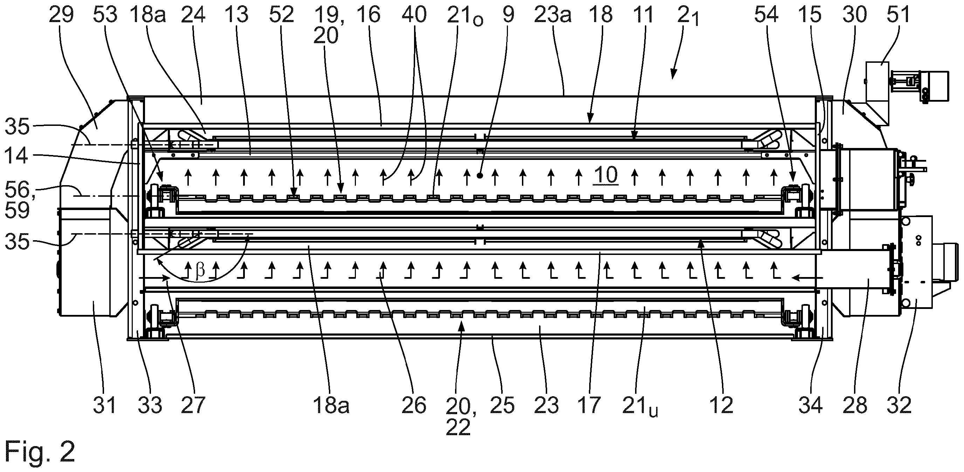

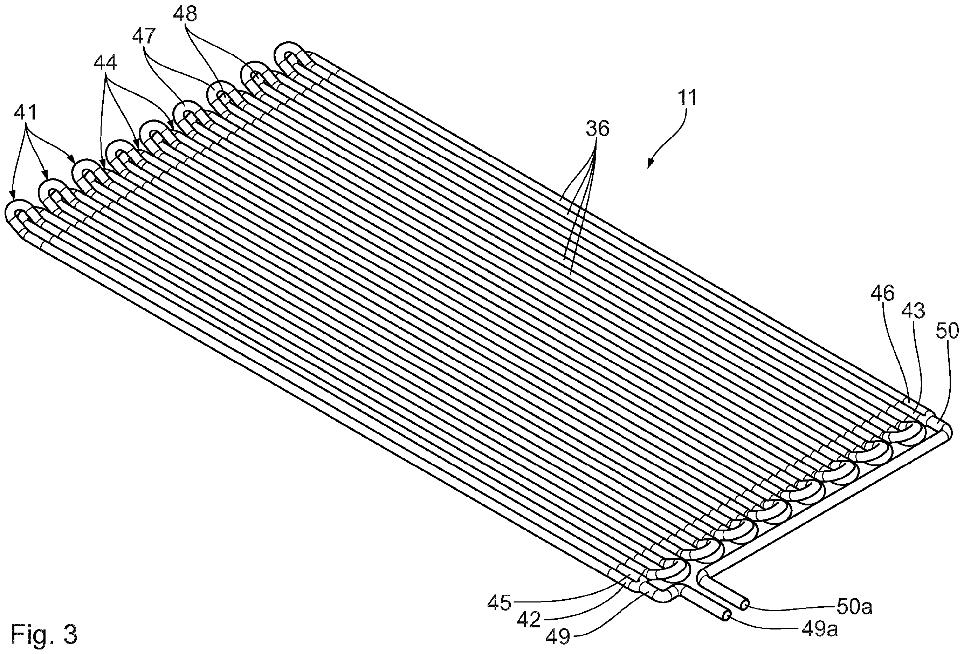

Fig. 2 zeigt einen Schnitt durch eines der Backofenmodule am Beispiel des Backofenmoduls 2₁. Die Förderrichtung 9 steht senkrecht auf der Schnitt- bzw. Zeichenebene der Fig. 2. Fig. 3 zeigt am Beispiel eines der Ofenmodule 2ᵢ dieses stärker im Detail. Die Ofenmodule 3ᵢ sind ebenso aufgebaut, sodass es genügt, in der Detaildarstellung nach Fig. 3 beispielhaft eines der Ofenmodule 2ᵢ zu zeigen. Soweit es um Details geht, die der Fig. 2 nicht zu entnehmen sind, wird insoweit auf die Fig. 3 verwiesen.

Die Backofenmodule 2ᵢ, 3ᵢ haben jeweils einen Backraum 10, der einerseits direkt über die Umluft beheizt wird und andererseits über Strahlungswärme, die erzeugt wird von Wärmetauschern in Form von zwei Schlangen-Rohrwärmetauschern 11, 12. Die Backräume 10 sind jeweils Teil der beiden übereinander angeordneten Durchlauf-Backräume 7, 8, die gebildet werden einerseits von den oberen Ofenmodulen 2ᵢ und andererseits von den unteren Ofenmodulen 3ᵢ. Der oberhalb des Backraums angeordnete Rohrwärmetauscher 11 erzeugt dabei Oberhitze für den Backraum 10. Der unterhalb des Backraums angeordnete Rohrwärmetauscher 12 erzeugt Unterhitze für den Backraum 10.

Als Wärmeträger-Fluid, welches durch die Rohrwärmetauscher 11, 12 fließt, kommt Thermoöl zum Einsatz. Die beiden Wärmetauscher 11, 12 bilden zusammen mit einer nicht dargestellten Thermoölquelle eine Thermoöl-Heizeinrichtung.

Der obere Rohrwärmetauscher 11 wird von einem Haltegestell 13 getragen, welches an seitlichen Rahmen-Wangen 14, 15 des Backofenmoduls 6 montiert ist. Zusammen mit einer oberen Halteplatte 16 und einer unteren Halteplatte 17 bilden die beiden Rahmen-Wangen 14, 15 ein Backraummodul 18, in dem unter anderem die beiden Rohrwärmetauscher 11, 12 des Backofenmoduls 2ᵢ untergebracht sind. Zwischen der oberen Halteplatte 16 und dem oberen Rohrwärmetauscher 11 ist ein Luftführungsblech 18a angeordnet. Letzteres dient einer Vergleichmäßigung einer Umluftströmung im Backraum 10. Das Luftführungsblech 18a kann zudem vom Rohrwärmetauscher 11 Wärmeenergie aufnehmen und diese an die Umluft abgeben, kann also als zusätzliche indirekte Wärmetauscherkomponente dienen. Ein entsprechendes Luftführungsblech 18a ist zwischen dem unteren Rohrwärmetauscher 12 und der unteren Halteplatte 17 angeordnet.

Zwischen den beiden Rohrwärmetauschern 11, 12 läuft ein oberes Fördertrum 19 eines Endlos-Förderbandes 20, welches zum Transport des Backgutes durch den jeweiligen Durchlauf-Backraum 7, 8 zwischen dem Besschickungsmodul 4 und dem Ausgabemodul 5 dient. Der Durchlauf-Backofen 1 hat entsprechend seinem zweistöckigen Aufbau zwei Endlos-Förderbänder 20, nämlich ein oberes Endlos-Förderband 20 für die Backofenmodule 2ᵢ und ein in gleicher Weise aufgebautes unteres Endlos-Förderband für die unteren Ofenmodule 3ᵢ. Es genügt also, eines dieser Förderbänder nachfolgend zu beschreiben.

Das Förderband 20 hat eine Mehrzahl von Bandgliedern 21, von denen in der Fig. 2 ein oberes Bandglied 21ₒ und ein unteres Bandglied 21ᵤ zu sehen ist. Das obere Bandglied 21ₒ ist in seiner aktuellen Betriebsstellung Teil des oberen Fördertrums 19 und ist im Backraum 10 angeordnet. Das untere Bandglied 21ᵤ ist Teil eines unteren Bandtrums 22, welches unterhalb des Backraums 10 und des unteren Rohrwärmetauschers 11 durch einen Rücklauf-Förderbandraum 23 entgegen der Förderrichtung 9 als Teil des Endlos-Förderbandes 20 läuft.

Zwischen der oberen Halteplatte 16 des Backraummoduls 18 und einer oberen Modulplatte 23a des Backofenmoduls 2ᵢ, 3ᵢ ist ein oberer Umluftkanal 24 angeordnet. Zwischen der unteren Halteplatte 17 des Backraummoduls 18 und einer unteren Modulplatte 25 ist ein unterer Umluftkanal 26 angeordnet. Die beiden Umluftkanälen 24, 26 erstrecken sich über die gesamte Breite des Backofenmoduls 2ᵢ, 3ᵢ.

Über Zu- und Abluftkanäle 27, 28, 29, 30 stehen die beiden Umluftkanäle 24, 26 mit zwei Axial-/Radiallüftern 31, 32 in Fluidverbindung. Insgesamt ergibt sich so jeweils ein Umluft-Kreislauf des jeweiligen Ofenmoduls 2ᵢ, 3ᵢ. Der Backraum 10 des jeweiligen Ofenmoduls 2ᵢ, 3ᵢ ist Teil dieses Umluftkreislaufes. Die Lüfter 31 bzw. 32 sind zusammen mit dem jeweiligen Umluftkreis Bestandteile einer Umlufteinrichtung des Durchlauf-Backofens 1.

Die beiden Lüfter 31, 32 sowie die Zuluft- und Abluftkanäle 27 bis 30 sind an seitlichen, vertikal verlaufenden Rahmenplatten 33, 34 des Backofenmoduls 2ᵢ, 3ᵢ montiert.

Fig. 3 zeigt am Beispiel des oberen Schlangen-Rohrwärmetauschers 11 einen der beiden Rohrwärmetauscher, die im Backofenmodul 2₁ zum Einsatz kommen. Alle Rohrwärmetauscher 11, 12 der Backofenmodule 2ᵢ, 3ᵢ des Backofens 1 sind in gleicher Weise aufgebaut, sodass es ausreicht, nachfolgend diesen oberen Rohrwärmetauscher 11 zu beschrieben.

Der Rohrwärmetauscher 11 hat eine Mehrzahl, im dargestellten Ausführungsbeispiel nämlich sechsunddreißig, in einer Anordnungsebene (vgl. Ebene 35 in der Fig. 2) nebeneinander angeordnete Wärmetauscher-Rohrabschnitte 36 zur Führung eines Wärmeträger-Fluids. Als Wärmeträger-Fluid kann insbesondere Thermoöl zum Einsatz kommen.

Die Anordnung der Wärmetauscher-Rohrabschnitte 36 nebeneinander in der Anordnungsebene 35 kann so sein, dass tatsächlich in einer Seitenansicht wie in der Fig. 2 alle Wärmetauscher-Rohrabschnitte 36 miteinander vollständig fluchten. Alternativ können Längsachsen insbesondere benachbarter Rohrabschnitte 36 zur Anordnungsebene 35 verschiedenen Abstand haben. Eine Bandbreite der Abstände der Längsachsen der Rohrabschnitte 36 zur Anordnungsebene 35 ist aber auch in diesem Fall geringer als ein Durchmesser der einzelnen Rohrabschnitte 36 und ist insbesondere geringer als ein Bruchteil dieses Durchmesser, beispielsweise geringer als 80%, geringer als 70%, geringer als 60%, geringer als 50%, geringer als 40%, geringer als 30%, geringer als 20% und kann insbesondere geringer sein als 10% des Durchmessers der Rohrabschnitte 36. Der Rohrdurchmesser der Rohrabschnitte 36 kann im Bereich zwischen 10 mm und 150 mm und beispielsweise im Bereich zwischen 25 mm und 50 mm, zum Beispiel bei 35 mm, 38 mm oder 40 mm liegen. Sofern die Rohrabschnitte 36 in Seitenansicht nicht wie beispielsweise in der Fig. 2 vollständig miteinander fluchten, können die Längsachsen der Rohrabschnitte 36 in diesem Fall zur Anordnungsebene 35 also einen Abstand haben, der im Bereich zwischen 0 mm und +/- 20 mm liegt.

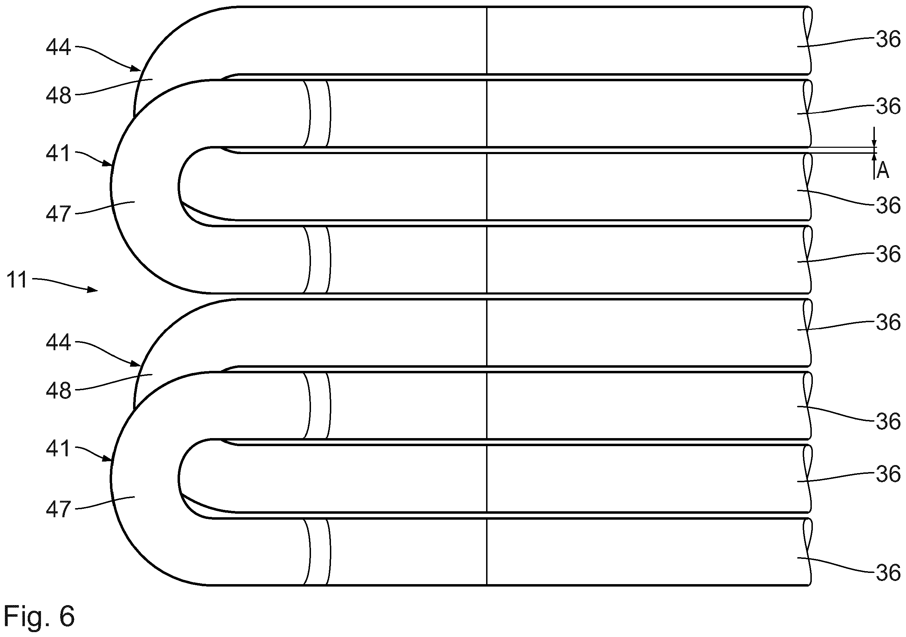

Ein Abstand A zwischen jeweils zwei benachbarten Rohrabschnitten 36 ist zum einen kleiner als der Rohrdurchmesser und zum anderen größer als 1% des Rohrdurchmessers. Dieser Abstand A ist in der Fig. 6, die einen Abschnitt des Rohrwärmetauschers 11 in einer Aufsicht zeigt, beispielhaft für zwei benachbarte Rohrabschnitte 36 veranschaulicht.

Ein absoluter Abstand zwischen zwei benachbarten Rohrabschnitten 36 kann im Bereich zwischen 1 mm und 50 mm liegen, insbesondere im Bereich zwischen 1 mm und 10 mm, im Bereich zwischen 1 mm und 5 mm und kann beispielsweise bei 2 mm liegen.

Dieser Abstand zwischen den benachbarten Rohrabschnitten 36 ermöglicht einen Durchgang zwischen diesen Rohrabschnitten. Ein derartiger Durchgang verläuft längs einer gesamten Erstreckung der Rohrabschnitte 36 durch den Backraum 10 quer zur Förderrichtung 9 und ist allenfalls unterbrochen durch Halterungskomponenten. Derartige Unterbrechungen sind im Vergleich zur Gesamterstreckung der Rohrabschnitte 36 sehr klein und im Regelfall geringer als 5% der Gesamterstreckung der Rohrabschnitte 36. Aufgrund dieser, durch den Abstand jeweils benachbarter Rohrabschnitte 36 resultierender Durchgänge ergibt sich ein effektiver Wärmeübertrag von den Rohrabschnitten 36 auf zwischen jeweils benachbarten Rohrabschnitten 36 durchströmendes Fluid.

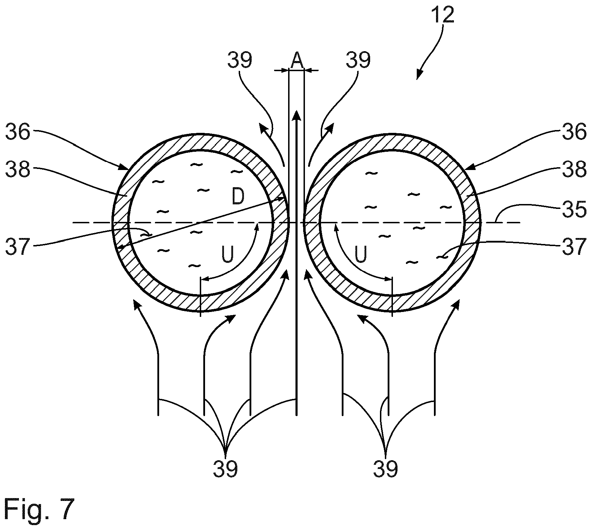

Entsprechende Wärmeübertragungsverhältnisse sind stark schematisch in der Fig. 7 für zwei benachbarte Rohrabschnitte 36 des Rohrwärmetauschers 12 dargestellt. Die Fig. 7 zeigt die Strömungsverhältnisse am unteren Schlangen-Rohrwärmetauscher 12. Durch die Rohrabschnitte 36 fließt das Wärmeträger-Fluid 37. Mantelwände 38 der Rohrabschnitte 36 werden von einem weiteren Wärmeaufnahme-Fluid, in der beschriebenen Ausführung von Luft 39 angeströmt und umströmt, wie durch einige Strömungspfeile schematisch wiedergegeben. Aufgrund des Abstandes A zwischen den benachbarten Rohrabschnitten 36, der im Bereich zwischen 1% und 100% des Rohrdurchmessers D liegt, strömt die anströmende Luft 39, nachdem sie in Kontakt mit Umfangsabschnitten U der Mantelwände 38 getreten ist, zwischen den benachbarten Rohrabschnitten hindurch. Nach Durchtritt durch die engste Stelle des Durchgangs zwischen den benachbarten Rohrabschnitten 36, an der der Abstand A vorliegt, kommt es im weiteren Strömungsverlauf zu einem Strömungsabriss der Luft 39 von der Mantelwand 37 und zu einer turbulenten Weiterströmung der Luft 39 nach oben, wo sich die Luft, die durch den betrachteten Durchgang zwischen den benachbarten Rohrabschnitten 36 geströmt ist, effektiv mit der Luft 39 durchmischt, die durch benachbarte Durchgänge zwischen den dargestellten Rohrabschnitten 36 und links und rechts benachbarten, nicht dargestellten Rohrabschnitten, hindurchgeströmt ist. Oberhalb der Anordnungsebene 35 kommt es bei der dargestellten Luftdurchströmung von unten nach oben sehr rasch zu einem geschlossenen und im Wesentlichen unterbrechungsfreien Volumen-Luftstrom nach oben hin zum Backraum 10, was in der Fig. 2 durch Strömungspfeile 40 wiedergegeben ist. Die Turbulenz sorgt dabei dafür, dass die Rohrabschnitte 36 selbst nicht als Blenden für den weiteren Luftstrom dienen, der Luftstrom oberhalb des Rohrwärmetauschers 12 also einen geschlossenen Luftvorhang ohne Lücken durch den Backraum 10 ergibt.

Der Rohrwärmetauscher 11 ist als Schlangen-Rohrwärmetauscher ausgebildet. Ein erster Schlangen-Leitungsweg 41 verläuft zwischen einem ersten Schlangen-Leitungseinlass 42 und einem ersten Schlangen-Leitungsauslass 43. Ein zweiter Schlangen-Leitungsweg 44 verläuft zwischen einem zweiten Schlangen-Leitungseinlass 45 und einem zweiten Schlangen-Leitungsauslass 46. Der in der Fig. 3 dargestellte Rohrwärmetauscher 11 hat also genau zwei Schlangen-Leitungswege 41 und 44. Grundsätzlich ist auch eine größere Anzahl entsprechender Schlangen-Leitungswege möglich.

Jeweils zwei in der Anordnungsebene 35 einander benachbarte Rohrabschnitte 36 gehören zu verschiedenen Schlangen-Leitungswegen. Bei der Darstellung nach Fig. 3 gehört der ganz links unten dargestellte Rohrabschnitt 36 zum ersten Schlangen-Leitungsweg 41. Der diesem direkt nach rechts oben benachbarte Rohrabschnitt 36 gehört zum zweiten Schlangen-Leitungsweg 44. Der diesem wiederum rechts oben direkt benachbarte Rohrabschnitt gehört dann zum ersten Schlangen-Leitungsweg 41. Die weiteren benachbarten Rohrabschnitte 36 gehören alternierend zum zweiten Schlangen-Leitungsweg 44 und zum ersten Schlangen-Leitungsweg 41. Der rechts oben ganz außen dargestellte Rohrabschnitt 36 gehört dann zum zweiten Schlangen-Leitungsweg 44 und mündet im zweiten Schlangen-Leitungsauslass 46 aus.

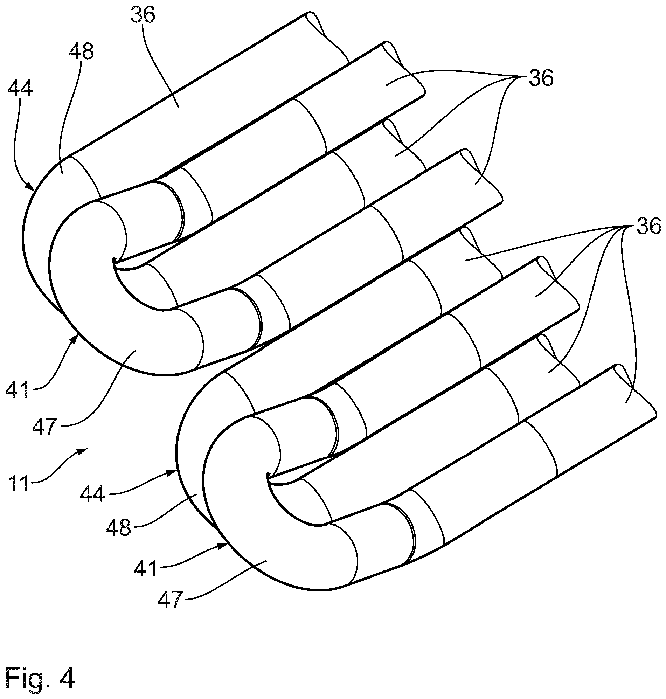

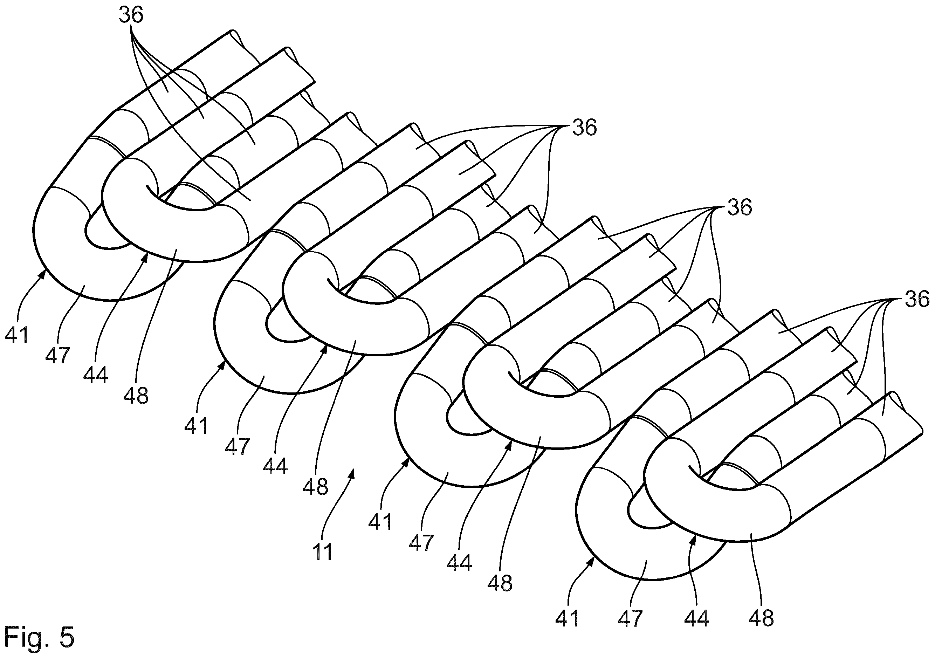

Diese alternierende Zugehörigkeit der Rohrabschnitte 36 zu den beiden Schlangen-Leitungswegen 41 und 44 vergrößert einen minimalen Biegeradius des Rohres, aus dem die Rohrabschnitte 36 gefertigt sind, innerhalb jeweils eines der beiden Schlangen-Leitungswege 41, 44. Dieser vergrößerte Biegungsradius wird durch den Verlauf von 180°-Umlenkabschnitten 47, 48 der beiden Schlangen-Leitungswege 41, 44 deutlich, der sich besonders aus den Fig. 4 bis 6 ergibt, die entsprechend vergrößerte Darstellungen der Schlangen-Leitungswege 41, 44 des Rohrwärmetauschers 11 zeigen. Ein innerer Biegeradius der 180°-Umlenkabschnitte 47, 48 ist dabei größer als der Rohrradius, ist also größer als der halbe Rohrdurchmesser D. Dieser innere Biegeradius der 180°-Umlenkabschnitte 47, 48 ist andererseits kleiner als der Rohrdurchmesser D.

Die beiden Schlangen-Leitungseinlässe 42, 45 einerseits und die beiden Schlangen-Leitungsauslässe 43 und 46 andererseits stehen jeweils über ein Hosenrohrstück 49, 50 miteinander sowie mit einem Sammeleinlass 49a einerseits und mit einem Sammelauslass 50a andererseits in Fluidverbindung.

Über das Hosenrohrstück 49 stehen die beiden Schlangen-Leitungseinlässe 42, 45 mit dem Sammel-Leitungseinlass 49a in Fluidverbindung. Der Sammel-Leitungseinlass 49a steht wiederum mit einer in der Zeichnung nicht dargestellten Wärmeträger-Fluid-Quelle in Fluidverbindung. Über das weitere Hosenrohrstück 50 stehen die beiden Sammel-Leitungsauslässe 43, 46 mit dem Sammel-Leitungsauslass 50a in Fluidverbindung. Der Sammel-Leitungsauslass 50a kann mit dem Sammel-Leitungseinlass 49a zur Bildung eines Wärmeträger-Fluid-Kreislaufes in Fluidverbindung stehen. Bestandteil dieses Kreislaufes kann eine in der Zeichnung ebenfalls nicht dargestellte Pumpe für das Wärmeträger-Fluid 37 sein.

Für den Schlangen-Leitungsweg 41 sind die 180°-Umlenkabschnitte 47 zwischen dem hierüber verbundenen beiden Rohrabschnitten 36 aus der Anordnungsebene 35 herausgeführt, nämlich stumpfwinklig herausgebogen. Ein Biegewinkel β zwischen der Anordnungsebene 35 und einer Anordnungsebene der 180°-Umlenkabschnitte 47 (vgl. Fig. 2, dort dargestellt beim Rohrwärmetauscher 12) beträgt bei der dargestellten Ausführung etwa 150°. Dieser Biegewinkel kann im Bereich zwischen 120° und 165° liegen.

Dieses Herausführen der 180°-Umlenkabschnitte 47 aus der Anordnungsebene 35 führt dazu, dass zwischen den 180°-Umlenkabschnitten 47, 48 der verschiedenen Schlauch-Leitungswege 41, 44 kein Bauraumkonflikt auftritt.

Ein Schlauch-Rohrwärmetauscher nach Art der Schlauch-Rohrwärmetauscher 11 und 12 des Backofenmoduls 6 wird folgendermaßen hergestellt:
Zunächst wird ein Rohr bereitgestellt, das ein Mehrfaches der Länge eines der Rohrabschnitte 36 zwischen den jeweiligen Umlenkabschnitten 47, 48 hat. Anschließend wird ein erster Schlauch-Leitungsweg, beispielsweise der Schlauch-Leitungsweg 41, durch Biegen des Rohres im Bereich der Umlenkabschnitte 47 zwischen den Rohrabschnitten 36 hergestellt. Anschließend wird ein zweiter Schlauch-Leitungsweg, in diesem Fall der Schlauch-Leitungsweg 44, durch Biegen des Rohres der Umlenkabschnitte 48 zwischen den Rohrabschnitten 36 hergestellt. Sobald bei diesen Herstell-Biegeschritten das Ende des Rohres erreicht ist, wird gegebenenfalls ein weiteres Rohr mit gleichem Durchmesser angestückelt, also mit dem gerade bearbeiteten Rohr verbunden, beispielsweise mit diesem stirnseitig verschweißt.

Nach Herstellen der beiden Schlauch-Leitungswege 41, 44 werden die beiden Schlauch-Leitungswege 41, 44 ineinander in der Anordnungsebene 35 eingesetzt. Es können dann die Hosenrohrstücke 49, 50 mit den Schlangen-Leitungseinlässen 42, 45 und den Schlangen-Leitungsauslässen 43, 46 verbunden, beispielsweise mit diesen verschweißt und gegebenenfalls ein Fluiddurchgang zwischen dem jeweiligen Hosenrohrstück 49, 50 und den jeweiligen Leitungseinlässen 42, 45 einerseits und Auslässen 43, 46 andererseits geschaffen werden.

Bei einer Variante des Herstellungsverfahrens werden vor dem Einsetzen der beiden Schlauch-Leitungswege 41, 44 ineinander die 180°-Umlenkabschnitte 47 zwischen den Rohrabschnitten 36 des gleichen Schlauch-Leitungsweges 41 aus der Anordnungsebene 35 herausgebogen. Dieses Herausbiegen kann beim Herstellen dieses Schlangen-Leitungsweges 41 durch Verwenden eines entsprechenden, insbesondere flächigen, Biegewerkzeugs gleichzeitig erfolgen.

Beim Backen mit dem Tunnel-Durchlauf-Backofen 1 wird das auf dem Fördertrum 19 durch die Ofenmodule 2 bis 6 hindurchgeführte Backgut einerseits durch Strahlungswärme von den Rohrwärmetauschern 11, 12, die in den jeweiligen Ofenmodulen 2 bis 6 untergebracht sind, und andererseits über die Umluft, die durch den jeweiligen Backraum 10 des Ofenmoduls 2 bis 6 strömt, erwärmt. Die Wärmebeiträge "Strahlungswärme" einerseits und "Umluftwärme" (Wärmeabgabe an durchströmendes Fluid) andererseits können durch entsprechende Auslegung der Rohrwärmetauscher 11, 12 sowie durch die Temperatur und den Fluss des Wärmeträger-Fluids 37 durch die Rohrwärmetauscher 11, 12 und anderseits durch die durch die Backräume 10 jeweils strömende Luftmenge vorgegeben werden.

Eine Luftströmung durch den Backraum 10 (vgl. z.B. die Luftströmung 40 in der Fig. 2) kann je nach Auslegung des Ofenmoduls 2 bis 6 von unten nach oben oder auch von oben nach unten gerichtet sein.

Beim Strömungsbeispiel nach Fig. 2 sorgt der in der Fig. 2 linke Lüfter 31 dafür, dass die Umluft durch den Zuluftkanal 27 zunächst in den unteren Umluftkanal 26 einströmt. Gleichzeitig sorgt der in der Fig. 2 rechte Lüfter 32 dafür, dass die Umluft durch den rechten Zuluftkanal 28 in den unteren Umluftkanal 26 einströmt. Bedingt durch den im unteren Umluftkanal 26 dann entstehenden Überdruck strömt die Umluft aus dem unteren Umluftkanal 26 nach oben und zwischen den benachbarten Rohrabschnitten 36 des unteren Rohrwärmetauschers 12 hindurch, wie vorstehend im Zusammenhang mit der Fig. 6 bereits beschrieben. Anschließend durchströmt die Umluft das obere Fördertrum 19 des Endlos-Förderbandes 20 und umströmt dann die hierauf geförderten Teiglinge durch den Backraum 10. Die Umluft durchströmt dann die Durchgänge zwischen den Rohrabschnitten 36 des oberen Rohrwärmetauschers 11 und strömt dann in den oberen Umluftkanal 24, von wo aus die Umluft dann über die Lüfter 31, 32 und die Abluftkanäle 29, 30 zur Vervollständigung des jeweiligen Umluftkreislaufes wieder abgesaugt wird. Ein Überdruck im Umluftkreislauf kann über ein klappengesteuertes Abgasrohr 51 (vgl. Fig. 2) entweichen.

Je nach Aufbau des Ofenmoduls 2 bis 6 kann das Ofenmodul 2 Lüfter wie bei der Ausführung nach Fig. 2 oder auch nur einen Axial-Radiallüfter aufweisen, der dann auf der einen oder auf der anderen Seite des Ofenmoduls angebracht sein kann. Soweit mehrere Ofenmodule in der Förderrichtung 9 hintereinander mit genau einem derartigen Lüfter ausgerüstet sind, kann die Anordnung dieses Lüfters zwischen den beiden Seiten des Durchlauf-Backofens 1 beispielsweise alternieren, sodass beispielsweise beim Ofenmodul 3 der Lüfter nach Art des Lüfters 32 rechts angeordnet ist, beim darauffolgenden Ofenmodul 4 links und beim darauffolgenden Ofenmodul 5 wiederum rechts. Alternativ oder zusätzlich kann die Strömungsrichtung der Umluft durch den Backraum 10 durch entsprechende Ansteuerung des jeweiligen Lüfters 31, 32 von unten nach oben oder von oben nach unten vorgegeben werden.

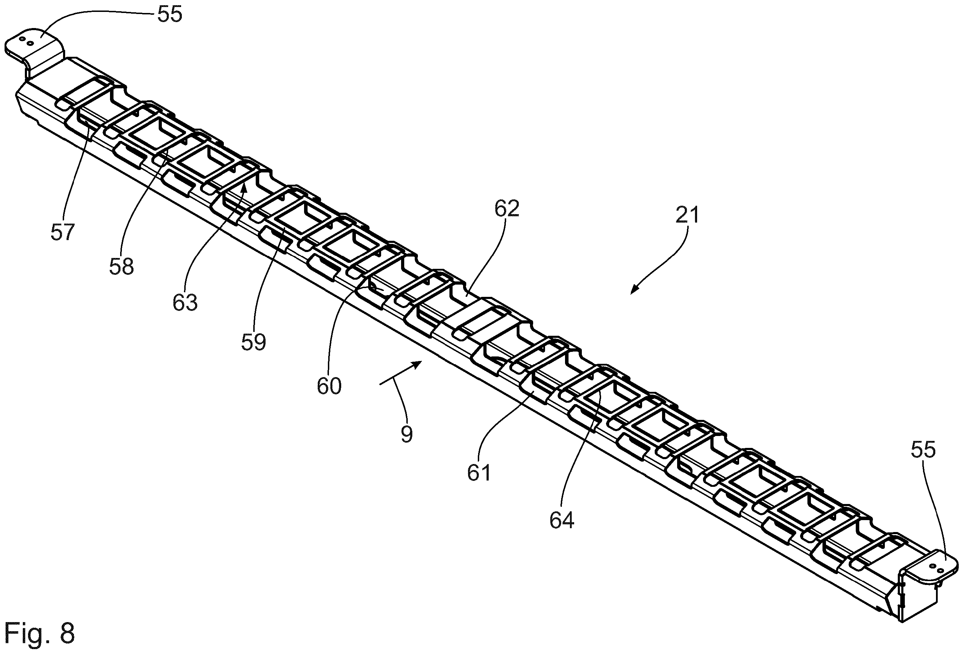

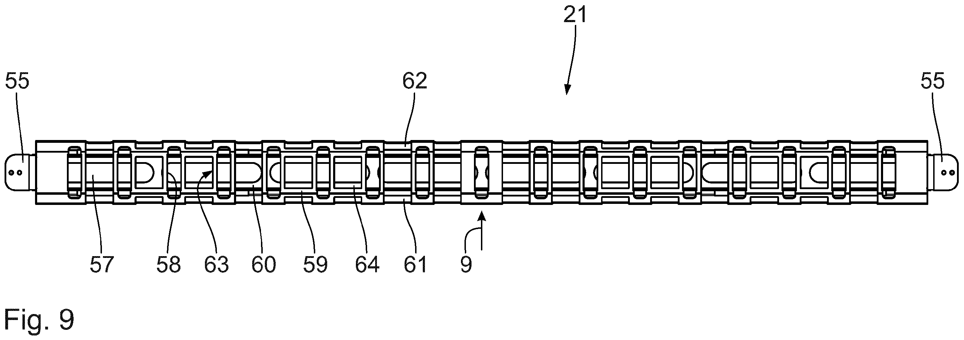

In den Ofenmodulen 2 bis 6 können verschiedene Temperaturzonen vorgegeben werden. Dies kann durch Vorgabe der Temperatur und/oder der Durchflussmenge des Thermoöls und/oder der Umluftmenge sowie der Umluftrichtung von unten nach oben/von oben nach unten vorgegeben werden. Hierfür dient eine zentrale Steuereinrichtung des Backofens 1. Anhand der Fig. 8 und 9 wird nachfolgend eines der Bandglieder 21 des erfindungsgemäßen Endlos-Förderbandes 20 näher erläutert. Da alle Bandglieder 21 des Endlos-Förderbandes 20 gleich aufgebaut sind, genügt die Beschreibung eines der Bandglieder 21.

Das Bandglied 21 erstreckt sich quer zur Förderrichtung 9 zwischen seitlichen Führungen 53, 54 für das Endlos-Förderband 20, die für das obere Fördertrum 19 im Backraummodul 18 untergebracht sind. Mit diesen Führungen 53, 54 ist das jeweilige Bandglied 21 über Aufhängungs-Montageplatten 55 verbunden.

Das obere Fördertrum 19 erstreckt sich in einer Förderebene 56, die parallel zu den Anordnungsebenen der Rohrwärmetauscher 11, 12 (vgl. Anordnungsebene 35) verläuft.

In Projektion in einer Richtung senkrecht zur Förderebene 56, gesehen also in Blickrichtung der Fig. 9, hat das Bandglied 21 Gas-Durchtrittsöffnungen 57, 58. Diese Gas-Durchtrittsöffnungen 57, 58 haben eine Gesamt-Öffnungsfläche, die mindestens 30% einer Gesamtfläche der Projektion des Bandgliedes 21 beträgt.

Das Bandglied 21 hat zwischen den seitlichen Führungen, also zwischen den beiden Aufhängungs-Montageplatten 55, mehrere und bei der dargestellten Ausführung 2 voneinander senkrecht zur Förderebene 56 beabstandete Gliederebenen 59, 60.

Die erste, obere Gliederebene 59 fällt mit der Förderebene 56 zusammen und wird definiert durch eine Mehrzahl von sich längs der Förderrichtung 9 zwischen seitlichen Gliederwangen 61, 62 erstreckenden Doppel-Gliederbügeln 63. Die Gas-Durchtrittsöffnungen 58 sind dabei zwischen den Bügeln des jeweiligen Doppel-Gliederbügels 63 ausgeführt. Weitere Gas-Durchtrittsöffnungen in der oberen Gliederebene 59 sind zwischen jeweils zwei benachbarten Doppel-Gliederbügeln 63 ausgeführt.

Die zweite, untere Gliederebene 60 ist bei den momentan das obere Fördertrum 19 bildenden Bandgliedern 21 unterhalb der ersten Gliederebene 59 ausgebildet. Dort verläuft zwischen den Gliederwangen 61, 62 eine Versteifungsplatte 64, in der die Gas-Durchtrittsöffnungen 57 ausgeführt sind.

Die Gas-Durchtrittsöffnungen 57 in der Versteifungsplatte 64 verlaufen nach Art von Langlöchern. Die Gas-Durchtrittsöffnungen 57 haben eine Längserstreckung in Richtung der Längserstreckung des Bandgliedes 21.

Die Gas-Durchtrittsöffnungen 58 zwischen den Bügeln der jeweiligen Doppel-Gliederbügel 63 sind nach Art von Langlöchern ausgeführt. Die Gas-Durchtrittsöffnungen 58 haben eine Längserstreckung quer zur Längserstreckung des Bandgliedes 21, also, solange das Bandglied 21 Bestandteil des oberen Fördertrums 19 ist, parallel zur Förderrichtung 9.

Zwischen den Aufhängungs-Montageplatten 55 ist das Bandglied 21 selbsttragend ausgeführt.

Die Bandglieder 21 laufen im Betrieb des Tunnel-Durchlauf-Backofens 1 nach Art von Kettengliedern zwischen den Führungen 53, 54 endlos um, wobei das obere Fördertrum 19 in der Förderrichtung 9 läuft und das untere Bandtrum 22 entgegen der Förderrichtung 9. Im Bereich des führenden Backofenmoduls 2₁ und des abschließenden Backofenmoduls 2_{N} findet eine 180°-Umlenkung über die entsprechend ausgeführten Führungen 53, 54 zwischen dem oberen Fördertrum 19 und dem unteren Bandtrum 22 statt.

## Patentansprüche

1. Endlos-Förderband (20), geeignet für einen Durchlauf-Backofen (1),
- aufweisend ein oberes Fördertrum (19) mit einer Mehrzahl von einstückigen Bandgliedern (21),
- wobei sich die Bandglieder (21) quer zu einer Förderrichtung (9) zwischen seitlichen Führungen (53, 54) für das Endlos-Förderband (20) erstrecken,
- wobei die Bandglieder (21) zwischen den seitlichen Führungen (53, 54) montiert sind,
- wobei sich das obere Fördertrum (19) in einer Förderebene (56) erstreckt,
- wobei in Projektion in einer Richtung senkrecht zu der Förderebene (56) jedes der Bandglieder (21) Gas-Durchtrittsöffnungen (57, 58) hat,
- wobei diese Gas-Durchtrittsöffnungen (57, 58) eine Gesamt-Öffnungsfläche haben, die mindestens 30 % einer Gesamtfläche der Projektion des jeweiligen Bandgliedes (21) beträgt, und
- wobei jedes der Bandglieder (21) zwischen den seitlichen Führungen (53, 54) mehrere voneinander senkrecht zur Förderebene (56) beabstandete Gliederebenen (59, 60) hat,
**dadurch gekennzeichnet,**
- **dass** die erste, obere Gliederebene (59) mit der Förderebene (56) zusammenfällt und durch eine Mehrzahl von sich längs der Förderrichtung (9) zwischen seitlichen Gliederwangen (61, 62) erstreckenden Doppel-Gliederbügeln (63) definiert wird,
- **dass** die Gas-Durchtrittsöffnungen (58) zwischen den Bügeln des jeweiligen Doppel-Gliederbügels (63) ausgeführt sind,
- **dass** weitere Gas-Durchtrittsöffnungen in der oberen Gliederebene (59) zwischen jeweils zwei benachbarten Doppel-Gliederbügeln (63) ausgeführt sind,
- **dass** die zweite, untere Gliederebene (60) bei den momentan das obere Fördertrum (19) bildenden Bandgliedern (21) unterhalb der ersten Gliederebene (59) ausgebildet ist,
- **dass** zwischen den Gliederwangen (61, 62) eine Versteifungsplatte (64) verläuft, in der die Gas-Durchtrittsöffnungen (57) ausgeführt sind,
- **dass** die Gas-Durchtrittsöffnungen (57) in der Versteifungsplatte (64) nach Art von Langlöchern verlaufen und eine Längserstreckung in Richtung der Längserstreckung des Bandgliedes (21) haben, und
- **dass** die Gas-Durchtrittsöffnungen (58) zwischen den Bügeln der jeweiligen Doppel-Gliederbügel (63) nach Art von Langlöchern ausgeführt sind und eine Längserstreckung quer zur Längserstreckung des Bandgliedes (21) haben.

2. Endlos-Förderband nach Anspruch 1, **dadurch gekennzeichnet, dass** die Bandglieder (21) zwischen Führungsaufhängungen (55), über die sie an den seitlichen Führungen (53, 54) montiert sind, selbsttragend ausgeführt sind.

3. Backofenmodul (2 bis 6) mit einem Endlos-Förderband (20) nach einem der Ansprüche 1 oder 2 und mit einem Backraum (10), durch den das obere Fördertrum (19) des Förderbandes (20) läuft.

4. Backofen (1) mit einem Endlos-Förderband nach einem der Ansprüche 1 oder 2, oder mit einem Backofenmodul (20) nach Anspruch 3, und mit einem Backraum (10), durch den das obere Fördertrum (19) des Förderbandes (20) läuft.

## Claims

1. Endless conveyor belt (20) for a conveyor baking oven (1),
- having an upper conveyor run (19) with a plurality of belt links (21) configured in one piece,
- wherein the belt links (21) extend transversely to a conveying direction (9) between lateral guides (53, 54) for the endless conveyor belt (20),
- wherein the belt links (21) are mounted between the lateral guides (53, 54),
- wherein the upper conveyor run (19) extends in a conveying plane (56),
- wherein each of the belt links (21), seen in projection in a direction perpendicular to the conveying plane (56), has gas passage openings (57, 58),
- wherein said gas passage openings (57, 58) have a total opening surface area, which amounts to at least 30% of a total surface area of the projection of the respective belt link (21), and
- wherein each of the belt links (21) has a plurality of link planes (59, 60) spaced from each other perpendicular to the conveying plane (56) between the lateral guides (53, 54),
**characterized in**
- **that** the first, upper link plane (59) coincides with the conveying plane (56) and is defined by a plurality of double link brackets (63) extending along the conveying direction (9) between lateral link side walls (61, 62),
- **that** the gas passage openings (58) are formed between the brackets of the respective double link bracket (63),
- **that** further gas passage openings are formed in the upper link plane (59) between in each case two adjacent double link brackets (63),
- **that** the second, lower link plane (60) is formed below the first link plane (59) for the belt links (21) which form the upper conveyor run (19) at a particular instant,
- **that** between the link side walls (61, 62) a reinforcement plate (64) runs, in which the gas passage openings (57) are formed,
- **that** the gas passage openings (57) in the reinforcement plate (64) extend in the manner of elongated holes and have a longitudinal extension in the direction of the longitudinal extension of the belt link (21), and
- **that** the gas passage openings (58) between the brackets of the respective double link brackets (63) are designed in the manner of elongated holes and have a longitudinal extension transverse to the longitudinal extension of the belt link (21).

2. Endless conveyor belt according to claim 1, **characterized in that** the belt links (21) are configured in a self-supporting manner between suspension mounting plates (55) by means of which they are mounted to the lateral guides (53, 54).

3. Baking oven module (2 to 6) with an endless conveyor belt (20) as claimed in any one of claims 1 or 2, and with a baking space (10) through which the upper conveyor run (19) of the conveyor belt (20) runs.

4. Baking oven (1) with an endless conveyor belt as claimed in any one of claims 1 or 2, or with a baking oven module (20) as claimed in claim 3, and with a baking space (10) through which the upper conveyor run (19) of the conveyor belt (20) runs.

## Revendications

1. Bande transporteuse continue (20) pour un four à cuire à passage continu (1)
- présentant un brin de transport supérieur (19) contenant une pluralité de maillons de bande (21) d'une seule pièce,
- dans laquelle les maillons de bande (21) s'étendent transversalement à une direction de transport (9) entre des guides latéraux (53, 54) pour la bande transporteuse continu (20),
- dans laquelle les maillons de bande (21) sont montés entre les guides latéraux (53, 54),
- dans laquelle le brin de transport supérieur (19) s'étend dans un plan de transport (56),
- dans laquelle, en projection dans une direction perpendiculaire au plan de transport (56), chacun des maillons de bande (21) a des ouvertures de passage de gaz (57, 58),
- dans laquelle ces ouvertures de passage de gaz (57, 58) ont une surface d'ouverture totale qui représente au moins 30 % d'une surface totale de la projection du maillon de bande (21) respectif, et
- dans laquelle chacun des maillons de bande (21) a, entre les guides latéraux (53, 54), plusieurs plans de maillons (59, 60) espacés les uns des autres perpendiculairement au plan de transport (56),
**caractérisée en ce**
- **que** le premier plan de maillon supérieur (59) coïncide avec le plan de transport (56) et est défini par une pluralité d'étriers de maillon doubles (63) s'étendant le long de la direction de transport (9) entre des flasques de maillon latéraux (61, 62),
- **que** les ouvertures de passage de gaz (58) sont réalisées entre les étriers de l'étrier de maillon double (63) respectif,
- **que** d'autres ouvertures de passage de gaz sont réalisées dans le plan de maillon supérieur (59) entre respectivement deux étriers de maillon doubles (63) voisins,
- **que** le deuxième plan de maillons inférieur (60) est réalisé, pour les maillons de bande (21) formant momentanément le brin de transport supérieur (19), en dessous du premier plan de maillon (59),
- **qu'**une plaque de renforcement (64) s'étend entre les flasques de maillon (61, 62), dans laquelle sont réalisées les ouvertures de passage de gaz (57),
- **que** les ouvertures de passage de gaz (57) dans la plaque de renforcement (64) s'étendent à la manière de trous oblongs et ont une extension longitudinale dans la direction de l'extension longitudinale du maillon de bande (21), et
- **que** les ouvertures de passage de gaz (58) entre les étriers des étriers de maillon doubles (63) respectifs sont réalisées à la manière de trous oblongs et ont une extension longitudinale transversale à l'extension longitudinale du maillon de bande (21).

2. Bande transporteuse continue selon la revendication 1, **caractérisée en ce que** les maillons de bande (21) sont réalisés de manière autoportante entre des suspensions de guidage (55) par lesquelles ils sont montés sur les guides latéraux (53, 54).

3. Module de four (2 à 6) comprenant une bande transporteuse continue (20) selon l'une quelconque des revendications 1 ou 2 et comprenant un espace de cuisson (10) traversé par le brin supérieur (19) de la bande transporteuse (20).

4. Four (1) comprenant une bande transporteuse continue selon l'une quelconque des revendications 1 ou 2, ou comprenant un module de four (20) selon la revendication 3, et comprenant un espace de cuisson (10) traversé par le brin supérieur (19) de la bande transporteuse (20).
